# EUROPÄISCHE PATENTSCHRIFT

(11) **EP 1 685 988 B1**
(45) Veröffentlichungstag und Bekanntmachung des Hinweises auf die Patenterteilung: **18.11.2009**
(21) Anmeldenummer: 05111821.4
(22) Anmeldetag: 08.12.2005
(51) Int. Cl.: B60G 3/01, B60G 11/27, B62D 21/14, B62D 7/06, B62D 49/06

(54) **Federungssystem für ein landwirtschaftliches Fahrzeug**
Suspension system for an agricultural vehicle
Système de suspension pour véhicule agricole

(30) Priorität: 28.01.2005 US 46310
(43) Veröffentlichungstag der Anmeldung: 02.08.2006
(73) Patentinhaber: DEERE & COMPANY, Moline, Illinois 61265-8098 (US)
(72) Erfinder: Wubben, Thomas R, Ankeny, Iowa 50031 (US); Maiwald, Marvin A, Ankeny, Iowa 50021 (US); Carlson, Brandon C, Ankeny, Iowa 50021 (US); Anderson, Jack C, Madrid, Iowa 50056 (US); Brett, William A, Ankeny, Iowa 50021 (US)
(74) Vertreter: Holst, Sönke

(56) Entgegenhaltungen:
- GB-A- 222 109
- US-A- 5 597 172
- US-A1- 2002 053 795

## Beschreibung

Die Erfindung betrifft ein Federungssystem für ein landwirtschaftliches Fahrzeug, insbesondere landwirtschaftliche Feldspritze, mit einem Rahmen, einem vertikal angeordneten Stützrohr, welches eine Stützrohrachse aufweist, einem mit dem Rahmen verbundenen Achsrohr, welches mit einem Stützrohrlager zur axial verschiebbaren und drehbaren Lagerung des Stützrohres verbunden ist, einer am unteren Ende des Stützrohrs befestigten Radaufhängung, einem drehbar um die Stützrohrachse angeordneten und mit einem Lenkzylinder verbundenen Lenkarm, wobei das Stützrohr relativ zum Lenkarm axial verschiebbar ist, einer Halterung und einem Federungskörper, der zwischen dem oberen Ende des Stützrohrs und der Halterung aufgenommen ist und eine Dämpfung für die Radaufhängung bereitstellt, wenn das Stützrohr axial im Stützrohrlager bewegt wird.

Federungssysteme in landwirtschaftlichen Fahrzeugen mit hoher Bodenfreiheit, wie beispielsweise die 4720er Feldspritze von John Deere, weist eine Gestängeanordnung auf, welche die von einem Lenkzylinder eingebrachten Drehmomente auf das Stützrohr überträgt. Eine derartige Gestängeanordnung ist beispielsweise in der US 5 597 172 offenbart und umfasst eine pneumatische Feder, die oberhalb eines Stützrohres angeordnet ist, welches in einem mit einer verstellbaren Achse verbundenen Stützrohrlager gelagert ist. Durch ein oberhalb der Achse angeordnetes Scherenhubgestänge wird die Räderstellung beibehalten, während eine aufrechte Axialbewegung der Stützrohre in den Stützrohrlagern zugelassen wird. An nicht lenkbaren Rädern ist der untere Endbereich des Scherenhubgestänges mit dem Stützrohrlager verbunden, um die voreingestellte Ausrichtung des Rades beizubehalten. Für steuerbare Räder ist der untere Endbereich des Scherenhubgestänges mit einer hydraulischen Steuereinrichtung verbunden, welche eine Achsverstellung zur Änderung der Spurweite zulässt. Obwohl die Scherenhubgestänge zuverlässig arbeiten und bei vertikalen Bewegungen des Stützrohres den Lenkzylinder ausgerichtet halten, so sind sie doch relativ kosten- und wartungsintensiv.

Eine andere Art von Federungssystem umfasst einen Lenkzylinder, der einenends mit dem Rahmen des Fahrzeugs und anderenends mit der Federung verbunden ist. Auch wenn ein derartiges System einfacher und weniger kostenintensiv als ein mit einem Scherenhubgestänge ausgebildetes Federungssystem ist, ändert sich hierbei bei Federungsbewegungen die effektive Länge des Lenkzylinders, was zu ungewünschten Änderungen des Lenkwinkels und zu Steuerproblemen führt. Bei Systemen, bei denen der Lenkzylinder derart montiert ist, dass er sich vertikal mit der Federung bewegt, können andere Probleme auftreten, wie z. B. komplexe Halterungen, hohe Kosten, Bewegungsspiel für den Lenkzylinder, aufwändige Leitungsführung für den Lenkzylinder sowie ein höheres Schadenspotential für den Lenkzylinder und die Leitungen.

Die US 2002/0053795 A1 offenbart ein Federungssystem für eine landwirtschaftliche Spritze, bei dem ein Stützrohr in einem am Rahmen des Fahrzeugs befestigten Stützrohrlager geführt wird. Das Stützrohr ist mit einem Federungskörper verbunden, durch den das Stützrohr vertikale Federbewegungen ausführen kann. Über einen am Stützrohr und Federkörper befestigten Lenkzylinder kann das Stützrohr um seine Längsachse verdreht werden, wobei der Lenkzylinder bei vertikalen Federbewegungen des Stützrohres sich mit der Federung bewegt.

Die der Erfindung zugrunde liegende Aufgabe wird darin gesehen, ein Federungssystem der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Federungssystem der eingangs genannten Art derart ausgebildet, dass erste und zweite vertikal ausgerichtete Führungsstangen, welche den Lenkarm und die Halterung miteinander verbinden, und eine fest mit dem Stützrohr verbundene und auf den Führungsstangen verschiebbar gelagerte Schiebehalterung vorgesehen sind, wobei die Schiebehalterung mit den Führungsstangen derart in Verbindung steht, dass eine vertikale Verschiebung relativ zu den Führungsstangen ermöglicht wird, wenn das Stützrohr sich axial bewegt, wobei die Führungsstangen und die Schiebehalterung das Stützrohr in eine Rotationsbewegung mit dem Lenkarm zwingen, um die Radaufhängung zu lenken, während axiale Relativbewegungen zwischen der Schiebehalterung und den Führungsstangen ermöglicht werden und wobei der Lenkzylinder einenends mit dem Rahmen und anderenends mit dem Lenkarm verbunden ist, so dass der Lenkarm den Lenkzylinder in einer konstanten vertikalen Stellung hält, wenn sich das Stützrohr axial bewegt und die Hublänge des Lenkzylinders von axialen Bewegungen des Stützrohrs unbeeinflusst ist.

Es wird ein Federungssystem für eine einzelradaufgehängte Stützrohrfederung beschrieben, welches ein vertikal ausgerichtetes Führungsstangenpaar mit einer auf den Führungsstangen gelagerten Schiebehalterung aufweist, die sich, bei durch unebenes Terrain verursachten Bewegungen der Federung, in vertikaler Richtung entlang der Führungsstangen verschiebt. Ein vertikal ausgerichtetes Stützrohr ist in einem Stützrohrlager montiert, so dass axiale und rotatorische Bewegungen des Stützrohrs relativ zum Stützrohrlager möglich sind. Ein Lenkarm ist schwenkbar um die Stützrohrlängsachse angeordnet, wobei sich das Stützrohr axial relativ zum Lenkarm bewegt. Die vertikal ausgerichteten Führungsstangen stellen eine Verbindung zwischen einer oberen Halterung und dem Lenkarm her, wobei ein Federungskörper zwischen der oberen Halterung und dem oberen Ende des Stützrohrs angeordnet ist, um eine Dämpfungsfunktion für eine Radaufhängung bereitzustellen, wenn sich das Stützrohr axial in dem Stützrohrlager bewegt. Die Schiebehalterung ist drehfest an dem Stützrohr befestigt und mit den Führungsstangen verbunden, wobei die Schiebehalterung vertikale Bewegungen relativ zu den Führungsstangen ausübt, wenn sich das Stützrohr axial bewegt. Die Führungsstangen und die Schiebehalterung zwingen das Stützrohr dazu rotatorische Bewegungen zusammen mit dem Lenkarm auszuführen, um die Radaufhängung zu lenken während relative axiale Bewegungen zwischen der Schiebehalterung und den Führungsstangen ermöglicht werden.

Das erfindungsgemäße Federungssystem eignet sich insbesondere für den Einsatz an Fahrzeugen mit hoher Bodenfreiheit, wie beispielsweise landwirtschaftliche selbstfahrende Spritzmaschinen, und vermeidet die Verwendung von Scherenhubgestängen und die Bewegung von Lenkzylinderhalterungen. Die Drehmomentbelastung wird von den Führungsstangen getragen, während die Schiebehalterung gleichzeitig mit diesen verbunden ist und es ermöglicht wird, dass die Schiebehalterung sich axial entlang der Führungsstangen verschiebt. Gegenüber vielen vorher erhältlichen Federungssystemen ist das erfindungsgemäße Federungssystem relativ leichtgewichtig ausgebildet und weniger komplex und kostenintensiv als Systeme, die Scherenhubgestänge oder mit der Federung bewegte Lenkzylinder verwenden. Ferner wurde der Wartungsaufwand verringert, das System kompakter gestaltet und das Schadenspotential für Lenkzylinder und Leitungen reduziert. Der Lenkzylinder ist einenends direkt mit dem Rahmen verbunden und wird in einer gleich bleibenden Ebene gehalten wenn sich das Federungssystem auf unebenen Bodenverhältnissen bewegt, so dass ungewollte Längenänderungen des Lenkzylinders sowie Probleme bei der Lenksteuerung vermieden werden.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine äußere perspektivische Ansicht eines Bereichs eines landwirtschaftlichen Fahrzeugs mit einer einzelradaufgehängten am Rahmen befestigten Stützrohrfederung,

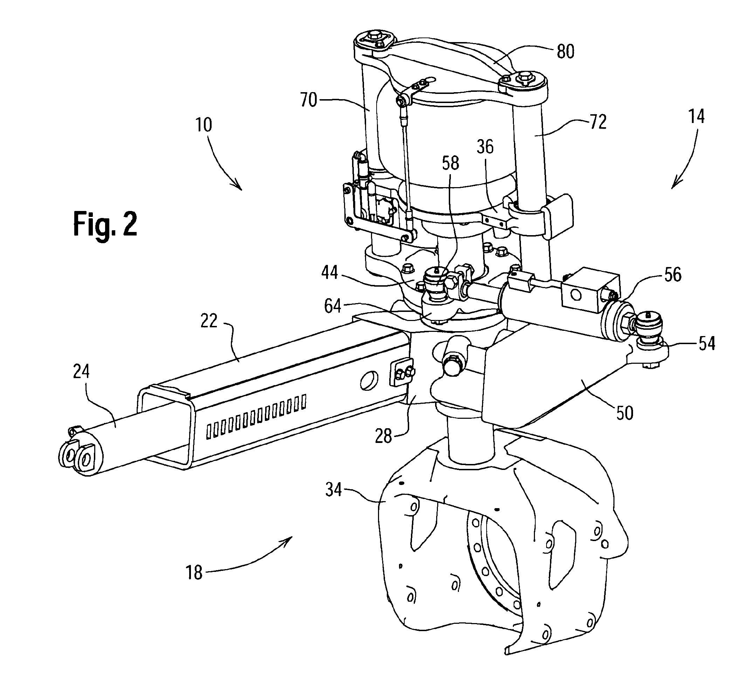

- Fig. 2: eine innere perspektivische Ansicht der Stützrohrfederung aus Figur 1,

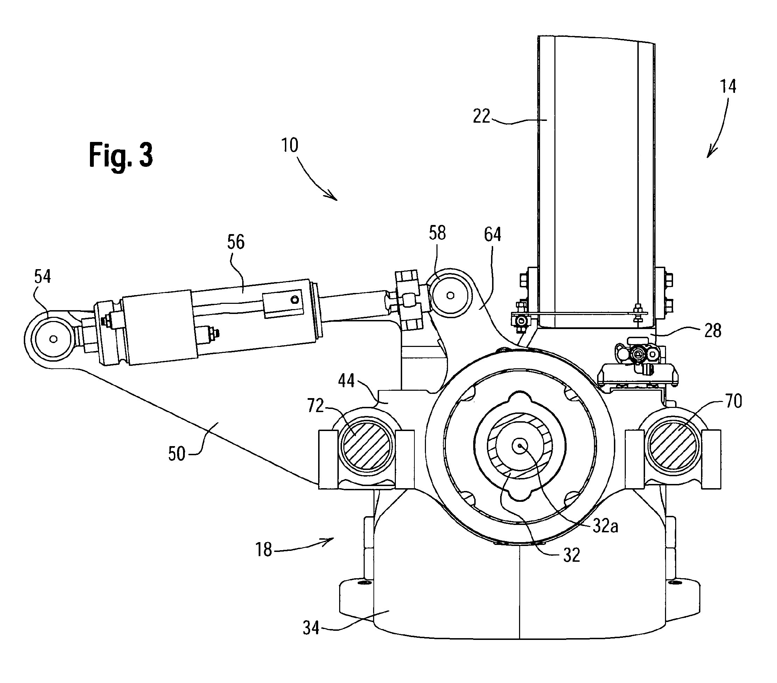

- Fig. 3: eine Draufsicht der Stützrohrfederung aus Figur 1, in teilweiser Querschnittsansicht und
- Fig. 4: eine Längsschnittansicht der Stützrohrfederung aus Figur 1.

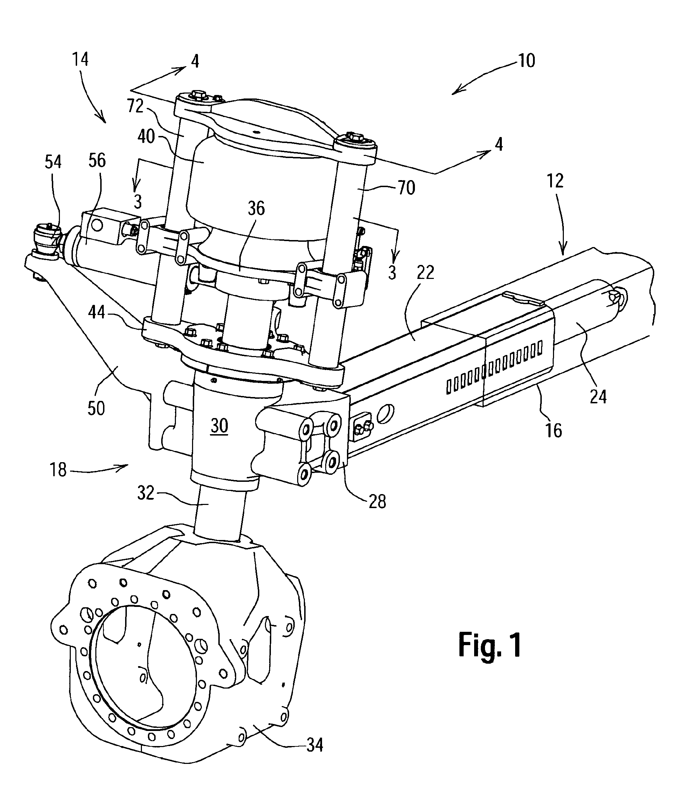

Figur 1 zeigt einen Teil eines mit großer Bodenfreiheit versehenes landwirtschaftliches Fahrzeugs 10, wie beispielsweise eine landwirtschaftliche selbstfahrende Feldspritze, mit einem Rahmen 12. Das Fahrzeug kann im Wesentlichen derart ausgebildet sein, wie es in der zuvor erwähnten US 5 597 172 A offenbart ist.

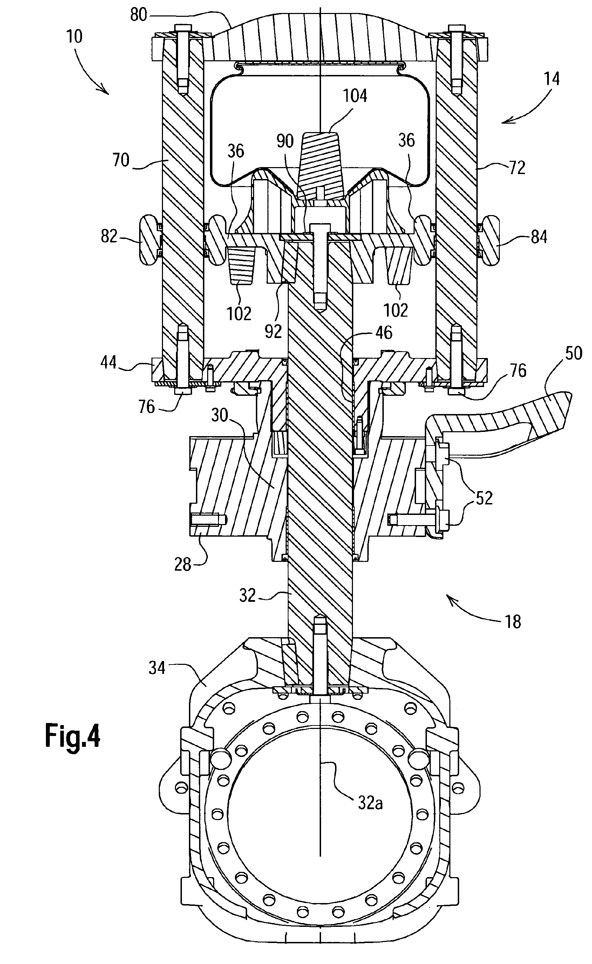

In Querrichtung zur Fahrzeuglängsachse sind verstellbare Einzelradaufhängungen 14 angeordnet, von denen eine gezeigt ist. Die Einzelradaufhängungen 14 sind in rohrförmigen Rahmenteilen 16 verschiebbar gelagert und weisen eine lenkbare Federungsanordnung 18 auf. Die Federungsanordnung 18 umfasst ein Achsrohr 22 mit einem inneren Endbereich, welcher von dem Rahmenteil 16 verschiebbar aufgenommen wird. Zur Verstellung der Spurweite ist das Achsrohr 22 mit einem hydraulischen Spurweiteneinstellzylinder 24 verbunden. Ein Kniegelenk 28 ist mit dem äußersten Ende des Achsrohres 22 verbunden und umfasst eine vertikal ausgerichtete Lagerstelle 30, in der ein vertikal ausgerichtetes Stützrohr 32, mit einer Stützrohrachse 32a (Figur 4), verschiebbar und rotierbar gelagert ist. Das untere Ende des Stützrohrs 32 ist fest mit einer Radaufhängung und Motorgehäuse 34 verbunden, welches ein hydraulisch betriebenes und lenkbares Rad trägt (nicht gezeigt). Das obere Ende des Stützrohrs 32 ist fest mit einer Schiebehalterung 36 verbunden, wobei eine Luftfeder 40, oder eine andere Art von Federkörper, oberhalb der Schiebehalterung 36 angeordnet ist und eine Federdämpfung für das Stützrohr 32 und das Gehäuse 34 bereitstellt.

Angrenzend zur Lagerstelle 30 ist mittels einer ausgeweiteten Bohrung 46 ein Lenkarm 44 rotierbar angeordnet und nimmt einen mittleren Bereich des Stützrohrs 32 verschiebbar auf. Das Stützrohr 32 kann sich relativ zum Lenkarm 44 frei axial bewegen, so dass die vertikale Position des Lenkarms 44 relativ zum Kniegelenk 28 konstant bleibt. Ein Lenkzylinderarm 50 ist mittels Bolzen 52 an das Kniegelenk 28 befestigt und erstreckt sich davon in Längsrichtung zum Fahrzeug zu einer kolbenbodenseitigen Verbindungsstelle 54 eines Hydraulikzylinders 56. Der Hydraulikzylinder 56 erstreckt sich von einer kolbenbodenseitigen Verbindungsstelle 54 zu einer kolbenstangenseitigen Verbindungsstelle 58 an einem sich radial vom Lenkarm 44 aus erstreckenden Lenkhebel 64.
Der Lenkarm 44 stützt die unteren Enden einer ersten und zweiten vertikal ausgerichteten Führungsstange 70, 72, welche außerhalb der Luftfeder 40 im Wesentlichen parallel zur Stützrohrachse 32a angeordnet sind. Die Führungsstangen 70, 72 sind über Bolzen 76 (Figur 4) und einer Kegelbefestigung fest mit dem Lenkarm 44 verbunden und erstrecken sich in Aufwärtsrichtung in einen Bereich oberhalb der Luftfeder 40. Eine an oberster Position angeordnete Halterung 80 zur Beabstandung der Führungsstangen 70, 72 und Befestigung der Luftfeder 40 ist mit den oberen Enden der Führungsstangen 70, 72 verschraubt, wobei die Luftfeder 40 zwischen der Schiebehalterung 36 und der oberen Halterung 80 angeordnet ist. Die Schiebehalterung 36 umfasst Führungen 82, 84 die verschiebbar über den äußeren Umfang der Führungsstangen 70, 72 geführt werden, um die Schiebehalterung 36 zur gemeinsamen Rotation mit dem Lenkarm 44 zu zwingen. Das obere Ende des Stützrohrs 32 ist mittels einer Kegelbefestigung und einer Gewindebolzenverbindung 90 mit der Schiebehalterung 36 verbunden, und weist ferner eine Keilverbindung auf, um das Stützrohr 32 zur Rotation mit der Schiebehalterung 36 zu zwingen. Dadurch wird ein Lenkdrehmoment am Lenkarm 44 über die Führungsstangen 70, 72 und über die Schiebehalterung 36 auf das Stützrohr 32 übertragen. Durch Ein- und Ausfahren des Lenkzylinders 56 wird somit auch das Stützrohr 32 über den Lenkarm 44 in der Lagerstelle 30 in eine Drehbewegung um die Stützrohrachse 32a versetzt und dadurch das Gehäuse 34 mit dem daran montierten Rad gelenkt. Die Führungsstangen 70, 72 sorgen dafür, dass das Stützrohr 32 in einer gleich bleibender Winkelbeziehung zum Lenkarm 44 steht, während sich das Stützrohr 32 in der Lagerstelle 30 und in der Bohrung 46 im Lenkarm 44 auf und ab bewegen kann, um die Luftfeder 40 zu komprimieren und zu entspannen wenn die Radaufhängung über den Boden bewegt wird oder wenn auf die Radaufhängung einwirkende Lastwechsel auftreten. Anschläge 102, 104 (Figur 4) sorgen für einen Schutz des Federungssystems bei Extremstellung des Stützrohrs 32.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Federungssystem für ein landwirtschaftliches Fahrzeug (10), insbesondere landwirtschaftliche Feldspritze, mit einem Rahmen (12), einem vertikal angeordneten Stützrohr (32), welches eine Stützrohrachse (32a) aufweist, einem mit dem Rahmen (12) verbundenen Achsrohr (22), welches mit einem Stützrohrlager (30) zur axial verschiebbaren und drehbaren Lagerung des Stützrohres (32) verbunden ist, einer am unteren Ende des Stützrohrs (32) befestigten Radaufhängung (34), einem drehbar um die Stützrohrachse (32a) angeordneten und mit einem Lenkzylinder (56) verbundenen Lenkarm (44), wobei das Stützrohr (32) relativ zum Lenkarm (44) axial verschiebbar ist, einer Halterung (80) und einem Federungskörper (40), der zwischen dem oberen Ende des Stützrohrs (32) und der Halterung (80) aufgenommen ist und eine Dämpfung für die Radaufhängung (34) bereitstellt, wenn das Stützrohr (32) axial im Stützrohrlager (30) bewegt wird, **dadurch gekennzeichnet, dass** erste und zweite vertikal ausgerichtete Führungsstangen (70, 72), welche den Lenkarm (44) und die Halterung (80) miteinander verbinden, und eine fest mit dem Stützrohr (32) verbundene und auf den Führungsstangen (70, 72) verschiebbar gelagerte Schiebehalterung (36) vorgesehen sind, wobei die Schiebehalterung (36) mit den Führungsstangen (70, 72) derart in Verbindung steht, dass eine vertikale Verschiebung relativ zu den Führungsstangen (70, 72) ermöglicht wird, wenn das Stützrohr (32) sich axial bewegt, wobei die Führungsstangen (70, 72) und die Schiebehalterung (36) das Stützrohr (32) in eine Rotationsbewegung mit dem Lenkarm (44) zwingen, um die Radaufhängung (34) zu lenken, während axiale Relativbewegungen zwischen der Schiebehalterung (36) und den Führungsstangen (70, 72) ermöglicht werden und wobei der Lenkzylinder (56) einenends mit dem Rahmen (12) und anderenends mit dem Lenkarm (44) verbunden ist, so dass der Lenkarm (44) den Lenkzylinder (56) in einer konstanten vertikalen Stellung hält, wenn sich das Stützrohr (32) axial bewegt und die Hublänge des Lenkzylinders (56) von axialen Bewegungen des Stützrohrs (32) unbeeinflusst ist.

2. Federungssystem nach Anspruch 1, **dadurch gekennzeichnet, dass** der Lenkarm (44) drehbar am Stützrohrlager (30) gelagert ist.

3. Federungssystem nach einem der Ansprüche 1 oder 2, **dadurch gekennzeichnet, dass** der Federungskörper (40) als eine zwischen dem Stützrohr (32) und der Halterung (80) angeordnete Luftfeder ausgebildet ist.

4. Federungssystem nach einem der Ansprüche 1 bis 3, **dadurch gekennzeichnet, dass** der Lenkarm (44) einen Lagerbereich aufweist, der sich in das Stützrohrlager (30) erstreckt.

5. Federungssystem nach einem der Ansprüche 1 bis 4, **dadurch gekennzeichnet, dass** die Führungsstangen (70, 72) und das Stützrohr (32) parallel zueinander angeordnet sind.

## Claims

1. Suspension system for an agricultural vehicle (10), in particular agricultural field sprayer, with a frame (12), a vertically arranged support tube (32) which has a support tube axis (32a), an axle tube (22) which is connected to the frame (12) and is connected to a support tube bearing (30) for the axially displaceable and rotatable mounting of the support tube (32), a wheel suspension means (34) which is fastened to the lower end of the support tube (32), a steering arm (44) which is arranged rotatably about the support tube axis (32a) and is connected to a steering cylinder (56), the support tube (32) being axially displaceable relative to the steering arm (44), a holder (80) and a suspension element (40) which is accommodated between the upper end of the support tube (32) and the holder (80) and provides damping for the wheel suspension means (34) when the support tube (32) is moved axially in the support tube bearing (30), **characterized in that** first and second vertically oriented guide rods (70, 72) which connect the steering arm (44) and the holder (80) to each other, and a sliding holder (36) which is connected fixedly to the support tube (32) and is mounted displaceably on the guide rods (70, 72) are provided, the sliding holder (36) being connected to the guide rods (70, 72) in such a manner that it can be displaced vertically relative to the guide rods (70, 72) when the support tube (32) moves axially, the guide rods (70, 72) and the sliding holder (36) forcing the support tube (32) to rotate together with the steering arm (44) in order to steer the wheel suspension means (34) while the sliding holder (36) and the guide rods (70, 72) can move axially relative to one another, and the steering cylinder (56) being connected at one end to the frame (12) and at the other end to the steering arm (44) such that the steering arm (44) holds the steering cylinder (56) in a constant vertical position when the support tube (32) moves axially and the stroke length of the steering cylinder (56) is unaffected by axial movements of the support tube (32).

2. Suspension system according to Claim 1, **characterized in that** the steering arm (44) is mounted rotatably on the support tube bearing (30).

3. Suspension system according to either of Claims 1 and 2, **characterized in that** the suspension element (40) is designed as a pneumatic spring arranged between the support tube (32) and the holder (80).

4. Suspension system according to one of Claims 1 to 3, **characterized in that** the steering arm (44) has a bearing region which extends into the support tube bearing (30).

5. Suspension system according to one of Claims 1 to 4, **characterized in that** the guide rods (70, 72) and the support tube (32) are arranged parallel to one another.

## Revendications

1. Système de suspension pour un véhicule agricole (10), en particulier un pulvérisateur agricole, comprenant un châssis (12), un tube de support disposé verticalement (32), qui présente un axe de tube de support (32a), un tube axial (22) connecté au châssis (12), qui est connecté à un palier de tube de support (30) pour le support rotatif et avec déplacement axial du tube de support (32), une suspension de roue (34) fixée à l'extrémité inférieure du tube de support (32), un bras de direction (44) disposé à rotation autour de l'axe du tube de support (32a) et connecté à un cylindre de direction (56), le tube de support (32) pouvant être déplacé axialement par rapport au bras de direction (44), une fixation (80) et un corps de suspension (40), qui est reçu entre l'extrémité supérieure du tube de support (32) et la fixation (80), et qui constitue un amortissement pour la suspension de roue (34), lorsque le tube de support (32) est déplacé axialement dans le palier de tube de support (30), **caractérisé en ce que** des première et deuxième barres de guidage (70, 72) orientées verticalement, qui relient entre eux le bras de direction (44) et la fixation (80), et une fixation coulissante (36) connectée fixement au tube de support (32) et montée de manière déplaçable sur les barres de guidage (70, 72) sont prévues, la fixation coulissante (36) étant en liaison avec les barres de guidage (70, 72) de telle sorte qu'un déplacement vertical par rapport aux barres de guidage (70, 72) soit possible lorsque le tube de support (32) se déplace axialement, les barres de guidage (70, 72) et la fixation coulissante (36) forçant le tube de support (32) dans un mouvement de rotation avec le bras de direction (44), afin de diriger la suspension de roue (34), tandis que des mouvements relatifs axiaux entre la fixation coulissante (36) et les barres de guidage (70, 72) sont permis, et le cylindre de direction (56) étant connecté à une extrémité au châssis (12) et à l'autre extrémité au bras de direction (44), de sorte que le bras de direction (44) maintienne le cylindre de direction (56) dans une position constante verticale lorsque le tube de support (32) se déplace axialement et que la longueur de la course du cylindre de direction (56) n'est pas influencée par des déplacements axiaux du tube de support (32).

2. Système de suspension selon la revendication 1, **caractérisé en ce que** le bras de direction (44) est monté de manière rotative sur le palier de tube de support (30).

3. Système de suspension selon l'une quelconque des revendications 1 ou 2, **caractérisé en ce que** le corps de suspension (40) est réalisé sous forme de ressort pneumatique disposé entre le tube de support (32) et la fixation (80).

4. Système de suspension selon l'une quelconque des revendications 1 à 3, **caractérisé en ce que** le bras de direction (44) présente une plage de palier qui s'étend dans le palier du tube de support (30).

5. Système de suspension selon l'une quelconque des revendications 1 à 4, **caractérisé en ce que** les barres de guidage (70, 72) et le tube de support (32) sont disposés parallèlement les uns aux autres.
